# FASCICULE DE BREVET EUROPEEN

(11) **EP 3 888 402 B1**
(45) Date de publication et mention de la délivrance du brevet: **18.06.2025**
(21) Numéro de dépôt: 19829277.3
(22) Date de dépôt: 14.11.2019
(51) Int. Cl.: H04W 72/51

(54) **PROCÉDÉ DE PRÉEMPTION DE RESSOURCES DE TRANSMISSION POUR L'ACHEMINEMENT DE DONNÉES TEMPS RÉEL**
VERFAHREN ZUR VORWEGNAHME VON ÜBERTRAGUNGSRESSOURCEN FÜR ECHTZEIT-DATENROUTING
METHOD FOR PRE-EMPTING TRANSMISSION RESOURCES FOR REAL-TIME DATA ROUTING

(30) Priorité: 28.11.2018 FR 1871998
(43) Date de publication de la demande: 06.10.2021
(73) Titulaire: Orange, 92130 Issy-les-Moulineaux (FR)
(72) Inventeur: STEPHAN, Emile, 92326 CHÂTILLON CEDEX (FR); QUINTUNA RODRIGUEZ, Veronica Karina, 92326 CHÂTILLON CEDEX (FR)
(86) Numéro de dépôt international: PCT/FR2019/052713
(87) Numéro de publication internationale: WO 2020/109694

(56) Documents cités:
- FUJITSU: "Resource Allocation for NR V2X Sidelink Communication", vol. RAN WG1, no. Spokane, United States; 20181112 - 20181116, 11 November 2018 (2018-11-11), XP051554326, Retrieved from the Internet <URL:http://www.3gpp.org/ftp/Meetings%5F3GPP%5FSYNC/RAN1/Docs/R1%2D1812410%2Ezip> [retrieved on 20181111]
- "3rd Generation Partnership Project; Technical Specification Group Radio Access Network; NG-RAN; F1 application protocol (F1AP) (Release 15)", 25 September 2018 (2018-09-25), XP051526722, Retrieved from the Internet <URL:http://www.3gpp.org/ftp/tsg%5Fran/WG3%5FIu/Draft%5FSpecs/TSG%2DRAN81/Draft%5F38473%2Df30%5Fv2%2Ezip> [retrieved on 20180925]

## Description

### 1. Domaine technique

La demande d'invention se situe dans une architecture d'un réseau mobile où les fonctions de transmission sont mises en œuvre dans des entités distinctes du réseau. L'invention vise à permettre à une application nécessitant la disponibilité rapide de ressources de transmission pour acheminer des données relatives à cette application de préempter des ressources initialement allouées à une autre application.

### 2. Etat de la technique

Les réseaux cellulaires traditionnels, ou réseaux d'accès radio (RAN), se composent de nombreuses stations de base autonomes (BTS). Chaque BTS couvre une petite zone, tandis qu'un groupe de BTS assure une couverture sur une zone continue. Chaque BTS traite et transmet son propre signal à destination et en provenance du terminal mobile et achemine les données entre le terminal mobile et le réseau de communications d'un opérateur. Une station d'accès, ici nommée BTS, peut également être une station NodeB, une station eNodeB ou une station d'accès déployée pour les réseaux de génération future et notamment les réseaux dits 5G (de cinquième génération).

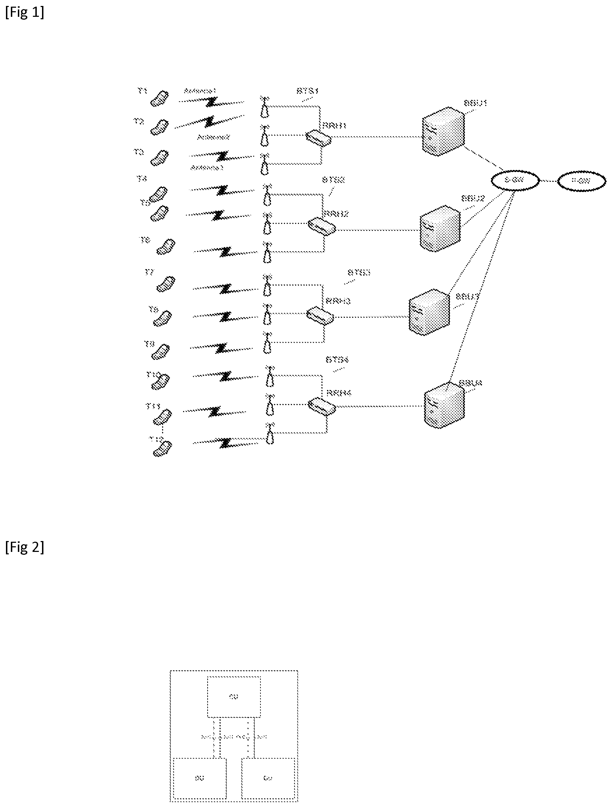

Plus récemment, une architecture de station de base distribuée a été introduite par les fournisseurs de matériel de télécommunications. La figure 1 présente un exemple d'une telle architecture. Dans cette architecture, l'unité de fonction radio, également appelée tête radio distante (RRH (Remote Radio Head)), est reliée à l'unité fonctionnelle numérique, ou unité de bande de base (BBU (Base Band Unit)) par exemple par une fibre. La RRH peut être installée sur le haut de la tour près de l'antenne, réduisant les pertes de transmission. La liaison de fibre entre RRH et BBU permet également une plus grande souplesse dans la planification et le déploiement du réseau. La BBU alloue des ressources radio aux terminaux attachés à la RRH correspondante selon un algorithme de planification (en anglais *Scheduling*) propre à la politique de l'opérateur gérant l'infrastructure. Ainsi, sur la figure 1, la BBU1 attribue des ressources radio, par exemple des blocs de ressources (RB (Resources Blocks)) identifiant des fréquences de transmission pendant des intervalles de temps, aux terminaux T1, T2, T3 respectivement attachés aux antennes 1, 2, 3 de la RRH1.

La plupart des stations de base modernes utilisent maintenant cette architecture découplée. Par la suite, on distinguera dans les architectures de réseau mobile les Unités Distribuées (DU) et les unités centralisées (CU) telles que présentées dans la figure 2. Notamment, une RRH est ainsi nommée DU et une BBU est une CU. La répartition des fonctions élémentaires mises en œuvre respectivement dans une DU et dans une CU est encore en discussion. Il est vraisemblable qu'une DU supportera les fonctions d'émission et de réception radio telles que la conversion analogique/numérique et l'amplification des signaux ainsi que la modulation. Une CU peut regrouper entre autres les fonctions de traitement du signal (codage) et d'ordonnancement pour le partage du spectre radio (en anglais *radio scheduling*) suivant un certain algorithme. Dans les premiers déploiements, la fonction de codage est le plus souvent mis en œuvre dans une DU. Une DU réside toujours au côté des antennes, tandis que la CU, est placée plus haut dans le réseau, vers les équipements de cœur de réseau. Dans l'évolution des architecture de réseaux mobiles, on envisage le déploiement de pools de CUs et on parle alors d'architecture de type C-RAN (Centralized - Radio Access Networks) ou même Cloud-RAN lorsque les CU sont mises en œuvre dans des espaces de stockage de type cloud. Les CUs partagent des ressources de calcul ainsi que les informations du réseau d'accès pour une utilisation plus effective des ressources radio (réduction des interférences, CoMP (Coordinated Multipoint) permettant la transmission d'un flux de données par plusieurs stations...).

L'interface de communication entre les entités CU et DU n'est pas encore définie. Cette interface est nommée Fs dans les travaux de spécification des réseaux de cinquième génération, un canal Fs-U de cette interface étant destiné à l'acheminement des données des utilisateurs et un canal Fs-C de l'interface étant destiné à l'acheminement des données de contrôle. Plusieurs options sont actuellement en cours de discussion pour la mise en œuvre de cette interface, comme par exemple l'interface eCPRI (Enhanced Common Public Radio Interface) qui est la version évoluée du CPRI actuellement déployé dans la 4G entre le RRH et le BBU. L'IEEE (Institute of Electrical and Electronics Engineers), par exemple, propose aussi une interface pour la transmission des signaux radio directement sur Ethernet (IEEE 1914.3).

Selon la technique antérieure, où la fonction de codage est mise en œuvre dans la CU, la CU prend en charge une fonction d'encodage des données, c'est-à-dire qu'elle sélectionne un type de modulation et de codage pour la transmission de données d'une application d'un terminal utilisateur et elle indique à une DU le type de modulation et de codage à utiliser, à quel moment et sur quelle fréquence, c'est-à-dire sur quelles ressources. La CU construit ainsi une table d'ordonnancement, comprenant des RB (Resource Blocks), communiquée à chaque DU. La RB correspond à une bande de fréquence élémentaire (le canal) allouée à un terminal dans un intervalle de temps élémentaire TS (en anglais *Time Slot*) et pour chaque RB est associée une puissance et une mode de codage et de de modulation(MCS). Cette information MCS indique un type de modulation et de codage attribuée à un terminal. Il peut s'agir par exemple de modulation BPSK, QPSK, 16QAM ou 64QAM. La CU décide donc d'une MCS pour un terminal donné et possiblement pour un flux de données relatif à une application du terminal. La table d'ordonnancement est communiquée à la DU pour la transmission effective des données vers le terminal ou en provenance du terminal sur le lien radio.

Cette répartition des fonctions entre la DU et la CU, et les problèmes de latence sur le lien entre une CU, ou un pool de CUs, et la DU ne permettent pas l'envoi de données urgentes à des terminaux. En effet, une CU doit en effet recevoir les données de l'application, les traiter, élaborer ou mettre à jour une table d'ordonnancement selon un algorithme de scheduling indiqué ci-dessus et transmettre à une DU la table d'ordonnancement mise à jour ou la nouvelle table d'ordonnancement pour prendre en compte la transmission des données urgentes, ce qui peut entraîner un délai non compatible avec les besoins de l'application.

La présente invention a pour objet d'apporter des améliorations par rapport à l'état de la technique.

Le document D1 (FUJITSU: "Resource Allocation for NR V2X Sidelink Communication",vol. RAN WG1, no. Spokane, United States; 20181112 - 20181116 11 novembre 2018) divulgue le problème de l'allocation de ressources pour applications avec differentes priorités.

### 3. Exposé de l'invention

L'invention vient améliorer la situation à l'aide d'un procédé d'allocation d'au moins une ressource de transmission parmi une pluralité de ressources, destinée à l'acheminement d'une première donnée relative à une première application dans une infrastructure de communication, le procédé étant mis en œuvre dans une entité distribuée de gestion de la pluralité de ressources, et comprenant:
- Une étape de réception, en provenance d'une entité centralisée de gestion, d'un message d'allocation d'une pluralité de ressources comprenant un ensemble de caractéristiques de transmission d'une deuxième donnée relative à une deuxième application,
- Une étape d'affectation d'au moins une ressource de la pluralité à la transmission de la première donnée,
- Une étape de sélection d'une caractéristique de l'ensemble pour la transmission de la deuxième donnée sur les ressources de la pluralité non affectées à la transmission de la première donnée.

Selon la technique antérieure, une entité de type DU, reçoit une table d'ordonnancement comprenant des ressources à allouer pour la transmission de données d'une application et une information sur les caractéristiques de modulation et de codage à utiliser pour la transmission de ces données. La DU, selon la technique antérieure, n'a pas la possibilité d'intervenir sur la table et alloue les ressources conformément à la table reçue d'une entité centralisée de gestion, telle qu'une CU.

L'invention vise à permettre à la DU de pouvoir modifier une instruction reçue de la CU, en accord avec la CU. La CU, plutôt que d'indiquer une seule caractéristique de modulation, indique à la DU que des données d'une application peuvent être transmises en utilisant une des caractéristiques de transmission, telles que des caractéristiques de modulation et de codage transmises. Pour une application donnée, la CU indique plusieurs caractéristiques de transmission, laissant la possibilité à la DU d'opter pour l'une de ces caractéristiques en fonction de contraintes liées à l'envoi de données d'une autre application, qu'elle doit transmettre de façon urgente. Le procédé permet ainsi à la DU de préempter des ressources initialement allouées à une application pour la transmission de données d'une autre application tout en garantissant que les données des deux applications sont bien transmises. Cette préemption s'accompagne en effet d'une sélection d'une des caractéristiques de transmission parmi celles reçues, cette caractéristique de transmission étant sélectionnée pour permettre la transmission des données des deux applications via un partage des ressources initialement uniquement allouées à une seule application.

Selon un aspect de l'invention, dans le procédé d'allocation, une ressource comprend une bande de fréquence et une durée.

La possibilité de modifier l'allocation de Transports Blocks correspondant à une ensemble de Resources blocks (bandes de fréquence et durée) indiquée par la CU impose à la DU de sélectionner une caractéristique de transmission (par exemple un code MCS) adaptée à la nouvelle répartition des ressources entre les deux données.

Selon un aspect de l'invention, dans le procédé d'allocation, une ressource comprend une longueur d'onde.

Dans le cas d'un réseau LiFi (Light Fidelity), la pluralité de ressources correspond à une longueur d'onde ou à un ensemble de longueur d'onde, celles-ci pouvant être allouées pour une durée limitée.

Selon un autre aspect de l'invention, le procédé d'allocation comprend en outre une étape d'obtention par l'entité distribuée de gestion d'un message comprenant un paramètre déclenchant l'étape d'affectation.

L'affectation par l'entité distribuée de gestion est possiblement déclenchée en fonction de paramètres. Ainsi, un opérateur peut décider de ne pas donner la possibilité à une entité distribuée de modifier une allocation initiale, impactant la qualité d'acheminement des données de la deuxième application sauf si la DU obtient un message comportant un paramètre particulier. Ce paramètre peut être lié à la criticité de première application, à la qualité de service requise pour l'acheminement de données de la première application ou de tout autre paramètre.

Selon un autre aspect de l'invention, dans le procédé d'allocation, le paramètre est obtenu d'un terminal.

Un terminal d'un utilisateur peut ainsi permettre de préempter, sous contrôle de la DU, des ressources de transmission et ainsi permettre que des données urgentes concernant un incident dans une zone géographique soient acheminées en priorité par rapport à des applications moins urgentes pour lesquelles ces ressources préemptées avaient été allouées initialement.

Selon un autre aspect de l'invention, le procédé d'allocation comprend en outre, en préalable à l'étape d'affectation, une étape de sélection d'une caractéristique de modulation et codage pour la transmission de la deuxième donnée.

La technique antérieure ne prévoit pas l'envoi d'une pluralité de caractéristiques de transmission de données d'une application. Alors que selon l'invention, l'entité distribuée peut décider de sélectionner une des caractéristiques pour la transmission des données de la deuxième application, celle-ci pouvant ensuite être modifiée si des données d'une autre application doivent être transmises de façon urgente.

Selon un autre aspect de l'invention, dans le procédé d'allocation, l'ensemble de caractéristiques reçues comprend en outre au moins une information de priorité associée à au moins une caractéristique.

Une information de priorité associée à une caractéristique de transmission, par exemple de modulation et de codage, permet à une CU, en charge de transmettre les caractéristiques, de recommander une caractéristique par rapport à une autre lorsque la DU sélectionne une caractéristique une fois qu'une ressource de transmission a été affectée à une autre application mais aussi au préalable à l'affectation lorsqu'une sélection intervient avant l'affectation.

Selon un autre aspect de l'invention, le procédé d'allocation comprend en outre une étape d'émission à destination de l'entité centralisée d'un message de notification comprenant une indication sur la première donnée.

Dans le cas où la première donnée de la première application correspond à une application qui peut durer dans le temps, la DU peut avantageusement informer la CU sur cette application de façon à ce que cette dernière puisse prendre en compte cette application pour l'allocation future de ressources de transmission. Ce message de notification permet ainsi à la CU de garder le contrôle sur les ressources allouées et de prendre en compte des interactions avec des applications sur lesquelles la DU n'a pas de contrôle.

Selon un autre aspect de l'invention, dans le procédé d'allocation, le message de notification comprend une prévision de ressources pour la transmission de la première donnée.

L'entité distribuée peut avantageusement transmettre à l'entité centralisée une prévision de ressources requises pour la transmission des données de la première application de façon à ce que l'entité centralisée puisse sélectionner les ressources et les caractéristiques de transmission adaptées à cette prévision.

Selon un autre aspect de l'invention, dans le procédé d'allocation, le message d'allocation est reçu sur une connexion multiplexant les canaux de données utilisateur, de contrôle et de synchronisation des ressources.

L'utilisation par exemple d'un lien de type eCPRI ou IEEE 1914.x pour transmettre le message d'allocation permet de profiter de la richesse fonctionnelle de cette interface et notamment des différents canaux de transmission (plan utilisateur, plan contrôle, plan de synchronisation). D'autres options sont possibles telles que par exemple, des liens de type MPLS (Multiprotocol Label Switching), de type VLAN (Virtualized Local Area Networks).

Selon un autre aspect de l'invention, dans le procédé d'allocation, le message d'allocation comprend en outre une information sur une tranche de réseau, dite slice, associée à la pluralité de ressources.

Notamment dans les futures générations de réseaux (5G), les services (applications, terminaux, classes de service...) sont associés à des tranches de réseaux mises en œuvre par un opérateur. Une tranche de réseau correspond à un ensemble de fonctions (élémentaires) mises à disposition de l'acheminement et du traitement de données relatives à un service (au sens large (terminal, application, domaine)) et selon l'invention, pour laquelle on alloue des ressources de transmission, telles que des transports blocks. Les ressources sont avantageusement associées à des tranches de réseau permettant ainsi de pouvoir intervenir sur des ressources appartenant à une tranche ou bien, selon la mise en œuvre, sur la répartition de ressources entre tranches de réseaux par exemple pour augmenter les ressources d'une tranche associé à des données de type temps réel.

Les différents aspects du procédé d'allocation qui viennent d'être décrits peuvent être mis en œuvre indépendamment les uns des autres ou en combinaison les uns avec les autres.

L'invention concerne également un dispositif d'allocation d'au moins une ressource de transmission parmi une pluralité de ressources, destinée à l'acheminement d'une première donnée relative à une première application dans une infrastructure de communication, comprenant:
- Un récepteur, apte à recevoir, en provenance d'une entité centralisée de gestion, d'un message d'allocation d'une pluralité de ressources comprenant un ensemble de caractéristiques de transmission d'une deuxième donnée relative à une deuxième application,
- Un module d'affectation, apte à affecter au moins une ressource de la pluralité à la transmission de la première donnée,
- Un module de sélection, apte à sélectionner une caractéristique de l'ensemble pour la transmission de la deuxième donnée sur les ressources de la pluralité non affectées à la transmission de la première donnée.

Ce dispositif, apte à mettre en œuvre dans tous ses modes de réalisation le procédé d'allocation qui vient d'être décrit, est destiné à être mis en œuvre dans un équipement de gestion d'un réseau allouant dynamiquement des ressources de transmission à des flux de données. Cela peut être par exemple une station d'accès radio (eNodeB, station d'accès 5G...), un équipement de type RRH voire un équipement de type BBU décentralisé.

L'invention concerne aussi un système d'allocation d'au moins une ressource de transmission parmi une pluralité de ressources, destinée à l'acheminement d'une première donnée relative à une première application dans une infrastructure de communication, comprenant:
- une entité distribuée de gestion comprenant un dispositif d'allocation,
- une entité centralisée de gestion comprenant:
   - un module d'affectation, apte à affecter une pluralité de ressources comprenant un ensemble de caractéristiques de transmission à la transmission de la deuxième donnée,
   - un émetteur, apte à émettre, à destination de l'entité distribuée de gestion, d'un message d'allocation d'une pluralité de ressources comprenant un ensemble de caractéristiques de transmission de la deuxième donnée relative à la deuxième application.

L'invention concerne aussi un programme d'ordinateur comprenant des instructions pour la mise en œuvre des étapes du procédé d'allocation qui vient d'être décrit, lorsque ce programme est exécuté par un processeur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions du programme d'ordinateur tel que mentionné ci-dessus.

Le support d'informations peut être n'importe quelle entité ou dispositif capable de stocker les programmes. Par exemple, le support peut comporter un moyen de stockage, tel qu'une ROM, par exemple un CD ROM ou une ROM de circuit microélectronique, ou encore un moyen d'enregistrement magnétique ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### 4. Brève description des dessins

D'autres avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels:
[Fig 1] présente une vue simplifiée d'une architecture de réseau dans laquelle est mise en œuvre l'invention selon un aspect de l'invention,
[Fig 2] présente une autre vue d'une architecture de réseau selon un autre aspect de l'invention,
[Fig 3] présente un aperçu de l'allocation de ressources selon une technique antérieure,
[Fig 4] présente un aperçu du procédé d'allocation selon un premier mode de réalisation de l'invention,
[Fig 5] présente un aperçu du procédé d'allocation selon un deuxième mode de réalisation de l'invention,
[Fig 6] présente un aperçu du procédé d'allocation selon un troisième mode de réalisation de l'invention,
[Fig 7] présente un exemple de structure d'un dispositif d'allocation selon un aspect de l'invention.

### 5. Description des modes de réalisation

Dans la suite de la description, on présente des exemples de plusieurs modes de réalisation de l'invention dans une infrastructure de communication mobile. L'invention peut être mise en œuvre dans tout type d'infrastructure ou des ressources de transmission sont allouées de façon dynamique à des terminaux pour que ceux-ci émettent ou reçoivent des données vers ou en provenance d'une entité distante.

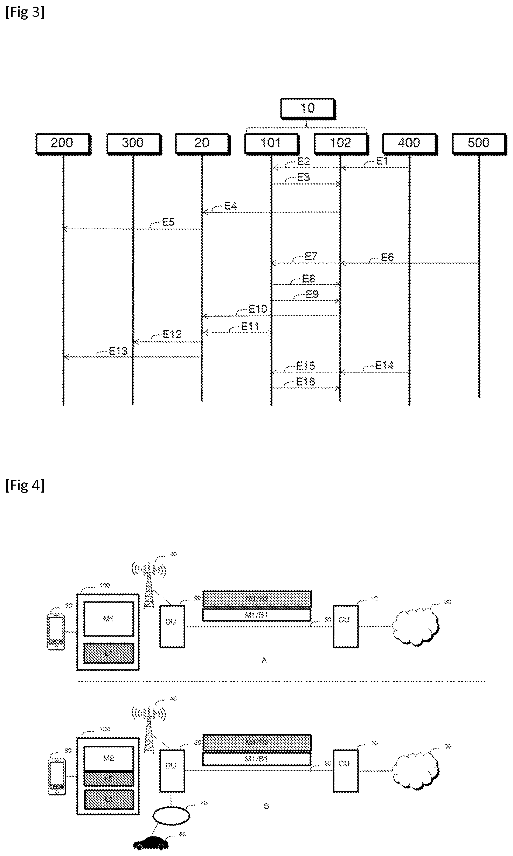

On se réfère tout d'abord à la figure 3 qui présente un aperçu de l'allocation de ressources selon une technique antérieure.

Dans cette figure 3, l'entité CU 10, qui est par exemple une BBU, est composée d'un encodeur 102 en charge d'encoder les données conformément à un type de modulation et d'encodage sélectionné et d'une entité 101 d'ordonnancement des ressources de transmission allouées à un terminal donné.

Lors de l'étape E1, un serveur applicatif HTTP 400 (HyperText Transfer Protocol) transmet un contenu à destination du terminal 200, celui-ci ayant émis auparavant une requête d'obtention du contenu à destination du serveur 400, cette requête étant non représentée sur la figure 3. A la réception du contenu, l'encodeur 102 de l'entité CU 10 transmet lors de l'étape E2 à destination de l'entité 101 d'ordonnancement une requête pour obtenir un type de modulation et d'encodage ainsi que des ressources de transmission pour l'envoi des données émises par le serveur 400. L'entité 101 d'ordonnancement disposant de ressources de transmission importantes pour ces données, elle répond lors de l'étape E3 en indiquant le type de modulation 256QAM pour l'encodage des données émises par le serveur 400 et elle indique les ressources à utiliser pour ces données. Le type de modulation 256 QAM permet au terminal 200 de bénéficier d'un bon débit pour les données émises par le serveur 400. Lors de l'étape E4, l'encodeur émet à destination de l'entité DU 20, qui peut être une entité RRH, les données reçues du serveur 400. L'entité DU 20 émet ensuite les données à destination du terminal 200 par l'intermédiaire d'une station d'accès, possiblement co-localisée avec l'entité DU 20. La station d'accès, selon la technologie radio utilisée pour émettre les données vers le terminal 200, peut être une station BTS, une station NodeB, une station eNodeB ou bien une station d'accès d'une génération de réseau radio de cinquième génération ou de génération suivante. L'émission des données par l'entité DU 20 vers le terminal 400 est réalisée en utilisant les ressources allouées par l'entité CU 10 et à l'aide du type de modulation et de codage sélectionné par l'entité d'ordonnancement 101.

Lors de l'étape E6, le serveur 500 de données temps réel, tel que par exemple un serveur d'alerte météo, transmet des données à émettre vers le terminal 300, abonné par exemple au service d'alerte météo. L'encodeur 102 reçoit les données du serveur 500 et doit les transmettre sans délai au terminal 300. Il sollicite alors l'entité 101 d'ordonnancement lors de l'étape E7 pour obtenir des ressources d'émission et un type de modulation et de codage pour ces données temps réel. L'entité d'ordonnancement 101 décide de sélectionner un autre type de modulation pour les données reçues du serveur 400 de façon à pouvoir attribuer des ressources et un type de modulation et de codage pour les données temps réel reçues du serveur 500. Lors de l'étape E8, l'entité 101 détermine et transmet le type de modulation 16QAM pour les données du serveur 400 à émettre vers le terminal 200 ainsi qu'un moindre nombre de ressources en comparaison avec les ressources allouées lors de l'étape E3. Lors de l'étape E9, il détermine et transmet le type de modulation QPSK et certaines ressources initialement allouées aux données émises par le serveur 400 pour les données du serveur 500 à émettre vers le terminal 300.

L'encodeur 102 transmet lors de l'étape E10 les données reçues du serveur 400 ainsi que les données reçues du serveur 500 vers l'entité DU en indiquant les ressources ainsi que les types de modulation et de codage relatifs à ces deux types de données. Ces transmissions peuvent être effectuées dans deux étapes distinctes.

L'étape E11 ne représente pas un envoi de message mais indique la latence pour d'une part attribuer des ressources initialement allouées au serveur 400 pour les données temps réel et pour sélectionner un autre type de modulation pour les données du serveur HTTP 400, cette allocation et cette sélection étant rendues nécessaires pour pouvoir acheminer les données temps réel.

Lors de l'étape E12, l'entité DU 20 émet les données temps réel vers le terminal 300 mais le choix du type de modulation peu performant effectué par l'entité 101 d'ordonnancement et les conditions ou la qualité de réception radio du terminal 300 conduisent à un décodage des données rendu périlleux voire impossible pour le terminal 300.

Lors de l'étape E13, le terminal 200 continue de recevoir les données, mais avec un type de modulation 16QAM, donc avec un débit plus faible qu'auparavant, lorsque le type 256QAM était utilisé. Ce débit n'est donc plus adapté au volume de données transmis par le serveur qui doit ajuster son volume d'envoi pour éviter les pertes de données et la baisse de qualité.

Lors de l'étape E14, toutes les données temps réel ont été acheminées par le serveur 500 vers le terminal 300, et il est alors possible pour l'entité d'ordonnancement de sélectionner à nouveau le type de modulation 256 QAM pour les données émises par le serveur 400 à destination du terminal 200. Le serveur 400 pourra, après quelques secondes, adapter son volume de données émis au débit plus important permis par le nouveau type de modulation.

Cette technique antérieure présente donc au moins deux problématiques. La prise en compte des contraintes des données temps réel n'est pas satisfait par le choix d'un type de modulation et une répartition des ressources de transmission par l'entité 101 d'ordonnancement. En effet, l'entité 10 CU centralisée n'a pas connaissance des conditions radio et la communication des ressources allouées et du type de modulation requiert un délai de transmission entre les entités CU 10 et DU 20. Par ailleurs, les modifications du type de modulation du trafic HTTP, pour permettre la transmission de données temps réel sur des ressources radio partagées pour la transmission des deux types de données (temps réel et HTTP), conduit à une dégradation de qualité de service pour le terminal 200. Le serveur 400 doit en effet asservir l'envoi des données au débit de données vers le terminal 200, ce changement de débit étant constaté par le serveur 400 après un certain délai.

La figure 3 a pour objet de présenter les problèmes posés par la technique antérieure et mieux comprendre le procédé d'allocation dans ses différents modes de réalisation.

On se réfère ensuite à la figure 4 qui présente un aperçu du procédé d'allocation selon un premier mode de réalisation de l'invention.

Dans cette figure 4, une entité CU 10 alloue des ressources de transmission et des caractéristiques de transmission à des terminaux pour que ceux-ci émettent et reçoivent des données. Ces ressources consistent à des bandes de fréquence (ou canal) pendant des intervalles de temps et les caractéristiques de transmission correspondent à des modes de codage et de modulation, par exemple représentés par la caractéristique MCS (Modulation and Coding Systems). Une ressource comprend une caractéristique de transmission selon la technique antérieure. Un même terminal 90 peut se voir allouer plusieurs bandes de fréquences (ou Resources Blocks) pendant plusieurs intervalles de temps, ce qui correspond à un Transport Block (un ensemble de RBs). Selon la technique antérieure, l'entité 10 CU ne transmet qu'un mode de modulation pour le terminal 90, voire pour une application spécifique du terminal 90 pour une ressource donnée. Pour attribuer un mode de modulation au terminal 90 attaché à la station d'accès 40, l'entité 10 CU communique une table d'ordonnancement comprenant les différents « resources blocks » et les codes MCS associés alloués aux différents terminaux attachés à la station d'accès 40. Cette table est communiquée à l'entité 20 DU, assurant des fonctions relatives à la transmission des données sur le réseau radio cellulaire. Une entité 10 CU peut transmettre des tables à plusieurs entités de types DU et l'entité 20 DU peut elle-même gérer un ensemble de stations d'accès. La figure 3 ne présente qu'une seule de chacune des entités 10 CU, 20 DU et station d'accès 40 par souci de clarté.

L'entité 10 CU est connecté à un réseau 30. Ce réseau 30 est par exemple connecté à l'Internet et permet ainsi aux terminaux attachés à la station d'accès 40, parmi lesquels le terminal 90, de pouvoir accéder à des services et communiquer avec des correspondants fixes ou mobiles. L'entité 10 CU et l'entité 20 DU sont interconnectées via un lien 50 qui peut par exemple être une fibre optique mais il peut s'agir d'un réseau par exemple de type IP (Internet Protocol) ou MPLS (Multi Protocol Label Switching).

Selon un exemple de l'invention, le terminal 90 attaché à la station d'accès 40 veut télécharger des données de type vidéo en streaming. L'entité 10 CU doit donc allouer des ressources de transmission et des caractéristiques de transmission à ce terminal 90 pendant la durée de téléchargement des données. Cette allocation tient compte des autres terminaux attachés à la station d'accès 40, voire à d'autres stations d'accès connectées à l'entité 20 DU pour établir sa table d'ordonnancement. Dans l'exemple, l'entité 10 CU décide de sélectionner deux caractéristiques B1 et B2 de transmission pour la ressource M1 pour le terminal 90. On note la caractéristique B1 relative à la ressource M1 M1/B1. Il est à noter que, selon la technique antérieure, une seule caractéristique est associée à une Resource block à un terminal ou à une application du terminal.

Selon un exemple de l'invention, l'entité 10 CU alloue des ressources de transmission pour l'application vidéo de streaming. Elle choisit dans le cas présent deux caractéristiques, c'est-à-dire deux types de codage et de modulation. Par exemple, on considère que la CU 10 sélectionne les MCS QPSK (Quadrature Phase-Shift Keying) correspondant à M1/B1 sur la figure et 16QAM (16 - Quadrature Amplitude Modulation) correspondant à M1/B2.

Selon un exemple, une information sur une tranche de réseau associée aux ressources. Notamment, s'agissant d'une application de vidéo streaming, l'entité 10 CU peut indiquer « Vidéo » pour les ressources allouées indiquant ainsi à la DU que les ressources allouées sont associées à une tranche «Vidéo ». L'entité DU 20 peut ainsi utiliser cette information de tranche pour gérer les données et appliquer des politiques propres aux tranches et aux données associées à ces tranches. Notamment, l'entité DU 20 peut utiliser cette information pour affecter ensuite des ressources, initialement associées à une tranche « Vidéo » à des données « Temps Réel », correspondant à une autre tranche, et à transmettre de façon plus urgente par rapport aux données Vidéo.

Dans le cas A de la figure 3, l'entité DU 20 sélectionne le mode de codage et de modulation le plus performant, à savoir M1/B2, pour émettre les données vers le terminal 90. Parmi l'ensemble 100 des ressources radio disponibles, un nombre important de ces ressources peut être alloué au flux streaming de l'application vidéo correspondant à M1 sur la figure et le code MCS 16-QAM peut être choisi puisque les ressources disponibles pour les données de streaming vidéo sont importantes. Il est à noter que dans le cas A, des ressources L1 sont allouées à des flux d'applications temps réel, par exemple pour un service de téléphonie. Ces ressources L1 peuvent être allouées par l'entité 10 CU. L'ensemble des ressources de transmission de la station 40 sont les ressources 100 correspondant à M1+L1.

Dans le cas B, intervient un événement intempestif. Dans ce cas, il s'agit d'un incident routier requérant que des informations soient diffusées à des terminaux géographiquement présents dans la zone, dont le terminal 90, où l'incident routier est intervenu, certains de ces terminaux étant attachés à la station d'accès 40. Dans ce cas, il faut que des ressources de transmission parmi l'ensemble M1 de ressources allouées aux flux de streaming soient allouées en priorité à cet événement intempestif et de façon rapide. Cette nouvelle répartition des ressources entre les flux de données de l'application de streaming vidéo et les flux de données relatives à l'incident routier est gérée par l'entité 20 DU car une nouvelle table d'ordonnancement établie par l'entité 10 CU prendrait trop de temps et ne serait pas compatible avec le besoin temps réel des informations liées à l'incident routier voire avec les conditions de propagation détectées par l'entité DU 20. L'entité 20 DU reçoit des informations d'un serveur 70 d'application de gestion de trafic routier ayant elle-même obtenu une information d'un véhicule 80 sur l'incident routier. L'entité 20 DU décide d'allouer plus de ressources de transmission, c'est-à-dire plus de Resources blocks à l'application de gestion de trafic routier. Il convient en outre que l'entité 20 DU diminue les ressources M1 allouées à l'application de streaming vidéo. Cette baisse de ressources à l'application streaming vidéo s'accompagne en outre d'un changement de code MCS parmi les codes reçus précédemment de l'entité 10 CU. Sachant que les ressources M2 sont moins nombreuses que les ressources M1, l'entité 20 DU sélectionne un code MCS moins performant. En l'occurrence, il opte pour le code MCS QPSK (M1/B1) reçu de l'entité 10 CU. Il est à noter que les flux de données de l'application de streaming et de l'application de gestion de trafic routier peuvent être respectivement acheminés vers le terminal 90 sur des tranches de réseaux (ou network slices en anglais) adaptées aux caractéristiques des flux de données.

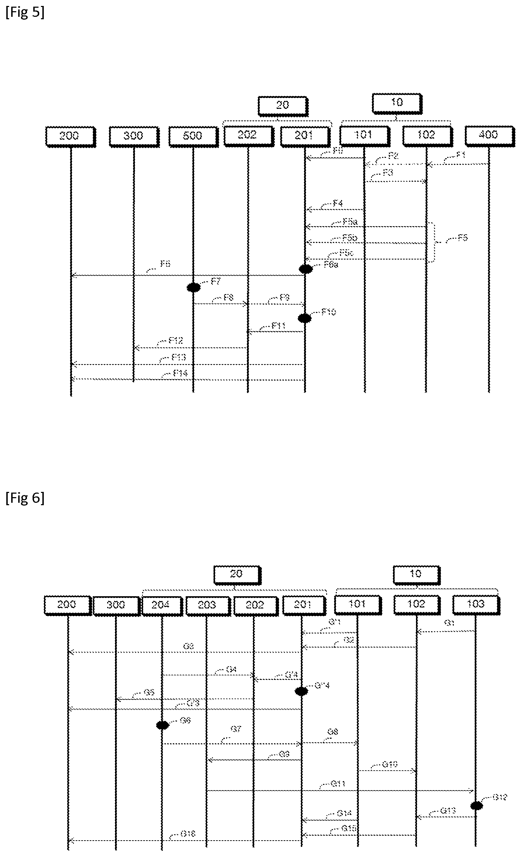

On se réfère maintenant à la figure 5 qui présente un aperçu du procédé d'allocation selon un deuxième mode de réalisation de l'invention.

Les entités de la figure 5 sont identiques à la figure 3 à la différence que l'entité distribuée DU 20 est précisée et comprend un encodeur 202 de données temps réel ainsi qu'une entité 201 d'ordonnancement. Selon un exemple, le serveur 500 peut également être intégré à l'entité DU 20 par exemple dans le cas où le serveur 500 est un serveur MEC (Mobile Edge Computing).

Selon un exemple, lors de l'étape F0, l'entité d'ordonnancement 101 émet un message comprenant un paramètre déclenchant l'affectation d'une ressource de transmission, initialement affectée par l'entité CU 10, par l'entité DU 20. Ce paramètre autorise ou non l'entité 20 DU à préempter des ressources allouées par l'entité 10 CU. Ce paramètre peut être associé à des données spécifiques ou pour l'ensemble des données transmises par l'entité 10 CU à l'entité 20 DU.

Les étapes F1 à F3 sont équivalentes aux étapes E1 à E3 de la figure 3.

Lors de l'étape F4, l'entité 10 CU et plus spécifiquement l'entité 101 d'ordonnancement de l'entité 10 CU transmet à l'entité 201 d'ordonnancement de l'entité 20 DU les ressources allouées pour les données émises par le serveur 400 ainsi que les différents types d'encodage possibles pour les données du service large bande HTTP mis à disposition par le serveur 400. Ces types d'encodage sont par exemple transmis dans un message UserDataChoice sur le canal CM (control and Management) d'un lien eCPRI.

Les informations transmises par l'entité 101 à l'entité 201 sont par exemple les suivantes:

```
 UserDataChoice : [
     { 11-20Mbps
 MCS_index:3, // S/N < 9
 Number_Resource_Block:30,
 user_id: 200},
     { 11-50Mbps
 MCS_index:15, // S/N < 9
 Number_Resource_Block:80,
 user_id: 200},
 { // 4k : -100Mbps :
 MCS_index: 27, // S/N < 20
 Number_Resource_Block:100,
 user_id: 200}]
```

Le code MCS correspond au type d'encodage, l'information correspond au niveau Signal/Bruit du canal de transmission radio et le Number_Resource_Block aux ressources allouées pour les données « large bande » émises par le serveur 400 pour le terminal 200.

L'entité 201 d'ordonnancement identifie les données HTTP émises par le serveur 400 et acheminées sur le canal User Plane du lien eCPRI à partir du type d'encodage (code MCS), du nombre de ressources et de l'identifiant de terminal (200). Dans le cas où les données du canal User Plane sont transportées sur le protocole QUIC (Quick UDP Internet Connections), chaque alternative décrite dans le message UserDataChoice comporte en plus un numéro de flux (ou stream) QUIC. L'entité 20 DU choisit la caractéristique de modulation et de codage adaptée aux contraintes des conditions radio pour l'émission des données vers le terminal 200. Selon une alternative, chaque caractéristique de modulation et de codage (MCS) comprend une information sur un niveau de priorité associé à chaque caractéristique. Cette information permet à l'entité 10 CU de garder un contrôle sur le type de modulation et de codage utilisé pour la transmission des données du serveur 400.

Les alternatives d'encodage peuvent également être transmises sur le canal User Plane du lien eCPRI. Le canal User Plane peut alors comprendre plusieurs connexions HTTP et chaque connexion contient un champ UserDataChoice avec un type d'encodage. Les connexions HTTP peuvent alternativement être des flux (streams) HTTP/2 ou bien encore flux (streams) du protocole QUIC si ce protocole est utilisé. Les messages USerDataChoices peuvent ainsi être échangés dans des trames PATH_CHALLENGE et PATH_RESPONSE du protocole QUIC.

Lors de l'étape F5, l'encodeur 102 de l'entité 10 CU transmet à l'entité 201 d'ordonnancement de l'entité 20 DU le contenu HTTP reçu du serveur 400 et destiné au terminal 200. L'encodeur 102 encode le contenu suivant plusieurs types de modulation conformément aux types de modulation transmis dans le message UserDataChoice lors de l'étape F4. Selon ce mode de réalisation, les types de modulation sont QPSK, 16QAM et 256QAM et les flux encodés selon ces types sont transmis lors des étapes respectives F5a, F5b et F5c. Il n'existe pas de limite quant au nombre et aux types de modulation transmis.

Lors de l'étape F6, l'entité 20 DU transmet le contenu HTTP à destination du terminal 200 en ayant sélectionné lors de l'étape F6a un type de modulation parmi les trois reçus lors de l'étape F5, en fonction des contraintes radio et du nombre de flux à émettre vers les différents terminaux gérés par l'entité 20 DU. Il est considéré dans cet exemple que l'entité 201 sélectionne le type de modulation 256 QAM et que les ressources de transmission utilisées par l'entité 20 DU sont des « transport blocks » correspondant à un groupe de « resources blocks » (RBs) communiqué lors de l'étape F4.

Lors de l'étape F7, le serveur applicatif 500 reçoit une information à retransmettre en urgence et avec la meilleure qualité possible à destination du terminal 300. Il peut s'agir par exemple d'une information relative à un accident à transmettre à un terminal 300 d'un véhicule, ce véhicule pouvant être un véhicule de secours. Lors de l'étape F8, le serveur applicatif 500 transmet à l'encodeur 202 les données de l'information à émettre par le serveur 500 et avec une urgence forte. Ces données peuvent avantageusement comprendre un paramètre indiquant à l'entité 20 DU que ces données sont urgentes et doivent être transmises avec le minimum de délai au terminal 300. Ce paramètre peut par exemple être un champ de qualité de service du protocole utilisé pour le transport des données ou un en-tête spécifique du protocole et le serveur 500 émettant ce paramètre peut également être un terminal, dans le cas par exemple ou une personne alerte les autres personnes d'une zone géographique donnée d'un problème survenant dans ladite zone. Lors de l'étape F9, l'encodeur 202 sollicite l'entité 201 d'ordonnancement pour obtenir des ressources de transmission et un type de modulation pour le trafic émis par le serveur 500. Lors de l'étape F10, l'entité 201 préempte des ressources de transmission initialement allouées aux données émises par le serveur 400 et change le type de modulation sélectionné initialement pour les données émises par le serveur 400. Il choisit par exemple le type QPSK qui était un autre type de modulation possible du message UserDataChoice émis lors de l'étape F4. Il sélectionne en outre un type de modulation et attribue des ressources de transmission pour les données émises par le serveur 500. Lors de l'étape F11, l'entité d'ordonnancement 201 transmet à l'encodeur 202 le type de modulation sélectionné pour les données émise par le serveur 500 ainsi que les ressources de transmission allouées.

Lors de l'étape F12, l'encodeur transmet les données du serveur 500 vers le terminal 300 en utilisant le type de modulation transmis par l'entité 201 et sur les ressources de transmission allouées par l'entité 201.

Lors de l'étape F13, l'entité d'ordonnancement 201 continue d'émettre les données reçus du serveur 400 vers le terminal 200, mais en utilisant le type de modulation QPSK et sur un moindre nombre de ressources par rapport à l'étape F6, certaines des ressources de transmission initialement allouées pour la transmission des données du serveur 400 ayant été allouées aux données urgentes à transmettre du serveur 500 vers le terminal 300. Lors de l'étape F14, une fois que toutes les données du serveur 500 ont été émises vers le terminal 300, l'entité 20 peut rétablir le type de modulation 256QAM et allouer plus de ressources aux données HTTP, des ressources radio de transmission ayant été libérées par la fin d'envoi des données du serveur 500 vers le terminal 300.

On se réfère maintenant à la figure 6 qui présente un aperçu du procédé d'allocation selon un troisième mode de réalisation de l'invention.

Dans ce mode de réalisation, le procédé d'allocation est mis en œuvre dans une architecture de réseau de type MPEG DASH (Moving Picture Experts Group - Dynamic Adaptive Streaming over HTTP) décrite dans le document ISO/IEC 23009-1:2014. L'entité 10 CU comprend, outre l'encodeur 102 et l'entité d'ordonnancement 101 un serveur de streaming vidéo de type SAND (Server and Network Assisted DASH). L'entité 20 DU, outre l'encodeur 202 et l'entité d'ordonnancement 201, comprend une entité 203 d'assistance au streaming vidéo compatible avec la norme MPEG DANE (Dash Assisting Network Element). L'entité 20 DU comprend également un serveur applicatif 204 de données temps réel qui peut être un serveur de type MEC (Multi-access Edge Computing).

Un terminal 5G 200 est utilisé par une personne pour visionner une application de type vidéo. Les données de l'application vidéo sont acheminées sur une tranche de réseau de type eMBB sur le réseau radio d'attachement du terminal 200. Les données vidéo sont transmises par le serveur 103 de streaming. Le serveur 103 émet les données à l'encodeur 102 lors de l'étape G1.

L'encodeur 102, après avoir obtenu des ressources et des caractéristiques de modulation et de codage de l'entité 101 (étapes non représentées sur la figure 6), transmet lors de l'étape G2 les données à transmettre au terminal 200 à l'entité d'ordonnancement 201 de l'entité DU 20. Il est à noter que l'étape G2 peut être composées de plusieurs sous étapes conformément à la figure 5, selon le protocole utilisé pour la transmission des données. L'entité d'ordonnancement 201 a obtenu en provenance de l'entité d'ordonnancement 101, lors de l'étape G'1, les ressources et les caractéristiques de transmission relatives aux données vidéo. Selon, cet exemple, lors de l'étape G'1, l'entité d'ordonnancement 101 envoie le message eCPRI.userData.eMBB.UE200.data.encodage-16QAM-256QAM indiquant que l'entité 20 DU peut choisir entre la caractéristique 16QAM ou 256 QAM pour la transmission des données vers le terminal 200 sur la tranche eMBB. Ce message, comprenant également les ressources allouées pour ces données visio, étant transmis sur le lien eCPRI. L'entité 201 d'ordonnancement choisit la caractéristique 256QAM et émet les données visio sur la slice eMBB vers le terminal 200 lors de l'étape G3, en utilisant les ressources allouées par l'entité d'ordonnancement 101, via l'entité 201. Ces données sont donc émises par l'entité 201 vers le terminal 200 sur les ressources allouées par l'entité 101 et en utilisant la caractéristique de transmission 256QAM.

Lors de l'étape G4, le serveur 204 émet des données temps réel, par exemple de supervision d'équipements de transport d'un réseau de communication à transmettre au terminal 300. Ces données, reçues par exemple de différents équipements par le serveur 204, sont à transmettre sur une tranche uRLLC du réseau radio. Lors de l'étape G5, l'encodeur 202 émet les données vers le terminal 300 sur la tranche de réseau uRLCC en utilisant certaines des ressources auparavant attribuées aux données eMBB. Il aura obtenu de l'entité 201 la caractéristique de modulation et d'encodage auparavant ainsi que les ressources à attribuer à la transmission de ces données lors de l'étape G'4 après sollicitation (non représentée) de l'entité 202. Selon une alternative, il aura conservé l'information sur la caractéristique à utiliser sur cette tranche de réseau d'un état précédent. Lors de l'étape G"4, l'entité 20 et plus spécifiquement l'entité d'ordonnancement 201 détermine une autre caractéristique de transmission, 16QAM, à utiliser pour l'envoi des données eMBB sur les ressources non préemptées pour les données uRLCC. Ces données eMBB sont transmises lors de l'étape G'3 sur des ressources non préemptées pour l'envoi des données uRLCC et en utilisant la caractéristique de transmission 16QAM et non plus la caractéristique 256QAM utilisé pour la transmission des données vidéo précédentes (étape G3).

Le serveur 204 analyse les données reçues des équipements de transport et en déduit, lors de l'étape G6, des prédictions de trafic temps réel. Lors de l'étape G7, il informe l'entité 201 d'ordonnancement de ces prévisions de trafic temps réel.

Lors de l'étape G8, l'entité 201 d'ordonnancement fait part de ces prévisions à l'entité 101 d'ordonnancement de l'entité 10 CU en transmettant un message eCPRI.CM.uRLLC.UE 300: {period: 120, unit: 'seconds', type: 'sinusoïde', points [ {8, 7},{12, 5},{76,7} ]. Ce message, transmis sur le canal de contrôle CM d'un lien eCPRI indique que les données temps réel à transmettre sur la tranche uRLLC à destination du terminal 300 sont de type sinusoïdal avec une indication sur quelques points permettant à l'entité 101 de déterminer la variation de réception des données. Cette information est également transmise à l'entité 203 d'assistance au streaming vidéo de l'entité 20 DU lors de l'étape G9. L'entité 101 transmet alors, lors de l'étape G10, un message comprenant la caractéristique de modulation et d'encodage 16QAM à l'encodeur 102 pour les données émises par le serveur 103.

Lors de l'étape G11, l'entité 203 d'assistance au streaming vidéo transmet au serveur 103 MPEG SAND les prévisions reçues de l'entité 201 lors de l'étape G9, par exemple dans un message sur le canal User Plane du lien eCPRI ou bien sur le canal CM (Control and Management) du lien. Lors de l'étape G12, le serveur 103 adapte l'émission des données vidéo aux prévisions reçues de l'entité 203, par exemple en transmettant les données de streaming vidéo à un débit plus faible. Lors de l'étape G13, le serveur 103 émet les données en bas débit à l'encodeur 102. L'encodeur 102 transmet, lors de l'étape G15 les données du serveur 103 à l'encodeur 202 qui transmet ensuite, lors de l'étape G16, les données via une station d'accès radio vers le terminal 200 en utilisant les ressources de transmission et la caractéristique de modulation et de codage indiquées par l'entité d'ordonnancement 101 à l'entité d'ordonnancement lors de l'étape G14, cette caractéristique et ces ressources ayant été également communiquées à l'encodeur 102 par l'entité 101 d'ordonnancement (échange non représenté).

Dans ce mode de réalisation, la caractéristique de modulation de données de streaming vidéo est adaptée en fonction des données temps réel à transmettre de façon concurrente sur des ressources radio partagées. En outre, le serveur de streaming adapte lui-même son débit d'émission de façon à éviter les impacts de visualisation du flux vidéo sur le terminal 200 (interruption, « freezing »...) lorsque le débit d'émission est supérieur aux ressources allouées et une caractéristique de modulation et de codage trop performante est utilisée.

Il est à noter que le procédé d'allocation peut également être mis en œuvre dans un réseau de type LiFi. Selon un mode de réalisation, une mise en œuvre du procédé dans un tel réseau LiFi est élaborée de la façon suivante:
Une maison contient un concentrateur LIFI (correspondant à l'entité CU) qui est relié en filaire avec les émetteurs LIFI. Une personne regarde une vidéo sur une tablette dans une pièce et des ressources de type Longueur d'onde sont allouées pour le visionnage de la vidéo grâce au réseau LiFi. La tablette reçoit la vidéo sur le réseau LiFi conformément aux ressources allouées et au code de modulation et de codage alloués. Un capteur (incendie) de la pièce envoi un évènement à l'ampoule qui héberge l'émetteur LIFI (dans ce cas, l'ampoule joue le rôle d'une entité DU). Des ressources en longueur d'onde initialement allouées à la vidéo par le concentrateur sont dynamiquement attribuées par l'ampoule aux données relatives à la détection de l'incendie conformément au procédé d'allocation. Dans ce mode de réalisation, les ressources sont des longueurs d'ondes plutôt que des bandes de fréquence.

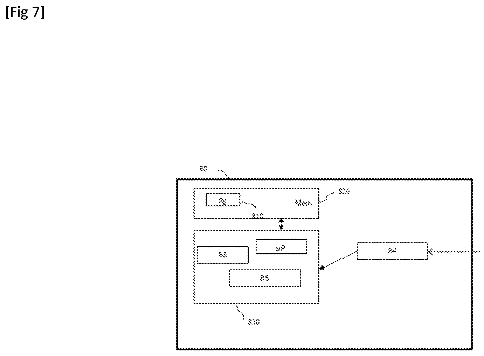

La [Fig 7] présente un exemple de structure d'un dispositif d'allocation selon un aspect de l'invention.

Le dispositif 80 d'allocation met en œuvre le procédé d'allocation conformément aux différents modes de réalisation viennent d'être décrits.

Un tel dispositif 80 peut être mis en œuvre dans un dispositif de gestion d'un réseau mobile tel qu'un dispositif de type RRH ou une station d'accès d'un réseau mobile.

Le dispositif peut être mis en œuvre dans tout type de réseau où des ressources et des caractéristiques de transmission sont allouées de façon dynamique, indépendamment de la génération de ce réseau.

Par exemple, le dispositif 80 comprend une unité de traitement 830, équipée par exemple d'un microprocesseur µP, et pilotée par un programme d'ordinateur 810, stocké dans une mémoire 820 et mettant en œuvre le procédé d'allocation selon l'invention. A l'initialisation, les instructions de code du programme d'ordinateur 810 sont par exemple chargées dans une mémoire RAM, avant d'être exécutées par le processeur de l'unité de traitement 830.

Un tel dispositif 80, d'allocation d'au moins une ressource de transmission parmi une pluralité de ressources, destinée à l'acheminement d'une première donnée relative à une première application dans une infrastructure de communication par exemple mis en œuvre dans une entité DU 20 des figures 5 et 6, comprend:
- Un récepteur 84, apte à recevoir, en provenance d'une entité centralisée de gestion, d'un message d'allocation d'une pluralité de ressources comprenant un ensemble de caractéristiques de transmission d'une deuxième donnée relative à une deuxième application,
- Un module 85 d'affectation, apte à affecter au moins une ressource de la pluralité à la transmission de la première donnée,
- Un module 83 de sélection, apte à sélectionner une caractéristique de l'ensemble pour la transmission de la deuxième donnée sur les ressources de la pluralité non affectées à la transmission de la première donnée.

## Revendications

1. Procédé d'allocation d'au moins une ressource de transmission parmi une pluralité de ressources, destinée à l'acheminement d'une donnée relative à une première application dans une infrastructure de communication, le procédé étant mis en œuvre dans une entité (20) distribuée de gestion de la pluralité de ressources (M1), et comprenant:
- une étape (F4, G2) de réception, en provenance d'une entité (10) centralisée de gestion, d'un message d'allocation d'une pluralité de ressources (M1) comprenant un ensemble de caractéristiques (M1/B1, M1/B2) de transmission de données relatives à une deuxième application,
- une étape de sélection d'une première caractéristique de l'ensemble pour la transmission d'une donnée relative à la deuxième application,
- une étape (F10, G'4) d'affectation d'au moins une ressource (M2) de la pluralité de ressources (M1) à la transmission de la donnée relative à la première application,
- une étape (F10, G"4) de sélection d'une deuxième caractéristique (M1/B2) de l'ensemble pour la transmission d'une donnée suivante relative à la deuxième application sur les ressources de la pluralité de ressources (M1) non affectées à la transmission de la donnée relative à la première application.

2. Procédé d'allocation, selon la revendication 1, où une ressource comprend une bande de fréquence et une durée.

3. Procédé d'allocation, selon la revendication 1, où une ressource comprend une longueur d'onde.

4. Procédé d'allocation, selon la revendication 1, comprenant en outre une étape (F0, F8) d'obtention par l'entité distribuée de gestion d'un message comprenant un paramètre déclenchant l'étape d'affectation.

5. Procédé d'allocation, selon la revendication 4, où le paramètre est obtenu d'un terminal.

6. Procédé d'allocation, selon la revendication 1, comprenant en outre en préalable à l'étape d'affectation, une étape (F6a) de sélection d'une caractéristique de modulation et codage pour la transmission de la donnée relative à la deuxième application.

7. Procédé d'allocation, selon la revendication 1, où l'ensemble de caractéristiques reçue comprend en outre au moins une information de priorité associée à au moins une caractéristique.

8. Procédé d'allocation, selon la revendication 1, comprenant en outre une étape (G8) d'émission à destination de l'entité centralisée d'un message de notification comprenant une indication sur la donnée relative à la première application.

9. Procédé d'allocation, selon la revendication 8, ou le message de notification comprend une prévision de ressources pour la transmission de la donnée relative à la première application.

10. Procédé d'allocation, selon la revendication 1, où le message d'allocation est reçu sur une connexion multiplexant les canaux de données utilisateur, de contrôle et de synchronisation des ressources.

11. Procédé d'allocation, selon la revendication 1, où le message d'allocation comprend en outre une information sur une tranche de réseau, dite slice, associée à la pluralité de ressources.

12. Dispositif (80) d'allocation d'au moins une ressource de transmission parmi une pluralité de ressources, destinée à l'acheminement d'une première donnée relative à une première application dans une infrastructure de communication, comprenant:
- un récepteur (84), apte à recevoir, en provenance d'une entité centralisée de gestion, d'un message d'allocation d'une pluralité de ressources comprenant un ensemble de caractéristiques de transmission de données relatives à une deuxième application,
- un module (85) d'affectation, apte à affecter au moins une ressource de la pluralité de ressources (M1) à la transmission de la donnée relative à la première application,
- un module (83) de sélection, apte à sélectionner
- une première caractéristique de l'ensemble pour la transmission d'une donnée relative à la deuxième application,
- une deuxième caractéristique de l'ensemble pour la transmission d'une donnée suivante relative à la deuxième application sur les ressources de la pluralité de ressources (M1) non affectées à la transmission de la donnée relative à la première application.

13. Système d'allocation d'au moins une ressource de transmission parmi une pluralité de ressources, destinée à l'acheminement d'une première donnée relative à une première application dans une infrastructure de communication, comprenant:
- une entité (20) distribuée de gestion comprenant un dispositif d'allocation selon la revendication 12,
- une entité centralisée (10) de gestion comprenant:
- un module d'affectation, apte à affecter une pluralité de ressources comprenant un ensemble de caractéristiques de transmission à la transmission des données relatives à la deuxième application,
- un émetteur, apte à émettre, à destination de l'entité distribuée de gestion, d'un message d'allocation d'une pluralité de ressources comprenant un ensemble de caractéristiques de transmission des données relatives à la deuxième application.

14. Programme d'ordinateur, **caractérisé en ce qu'**il comprend des instructions pour la mise en œuvre des étapes du procédé d'allocation selon la revendication 1, lorsque ce procédé est exécuté par un processeur.

15. Support d'enregistrement lisible par un dispositif d'allocation conforme à la revendication 12, sur lequel est enregistré le programme selon la revendication 14.

## Patentansprüche

1. Verfahren zur Allokation mindestens einer Übertragungsressource aus einer Vielzahl von Ressourcen, die für das Routing einer Dateneinheit, die sich auf eine erste Anwendung bezieht, in einer Kommunikationsinfrastruktur bestimmt ist, wobei das Verfahren in einer verteilten Verwaltungsentität (20) der Vielzahl von Ressourcen (M1) durchgeführt wird und umfasst:
- einen Schritt (F4, G2) des Empfangs, von einer zentralisierten Verwaltungsentität (10), einer Allokationsnachricht einer Vielzahl von Ressourcen (M1), die eine Menge von Merkmalen (M1/B1, M1/B2) einer Übertragung von Daten, die sich auf eine zweite Anwendung beziehen, umfasst,
- einen Schritt der Auswahl eines ersten Merkmals aus der Menge für die Übertragung einer Dateneinheit, die sich auf die zweite Anwendung bezieht,
- einen Schritt (F10, G'4) der Zuweisung mindestens einer Ressource (M2) aus der Vielzahl von Ressourcen (M1) zu der Übertragung der Dateneinheit, die sich auf die erste Anwendung bezieht,
- einen Schritt (F10, G"4) der Auswahl eines zweiten Merkmals (M1/B2) aus der Menge für die Übertragung einer folgenden Dateneinheit, die sich auf die zweite Anwendung bezieht, auf den Ressourcen der Vielzahl von Ressourcen (M1), die nicht der Übertragung der Dateneinheit, die sich auf die erste Anwendung bezieht, zugewiesen wurden.

2. Verfahren zur Allokation nach Anspruch 1, wobei eine Ressource ein Frequenzband und eine Dauer umfasst.

3. Verfahren zur Allokation nach Anspruch 1, wobei eine Ressource eine Wellenlänge umfasst.

4. Verfahren zur Allokation nach Anspruch 1, welches außerdem einen Schritt (F0, F8) des Erhaltens, durch die verteilte Verwaltungsentität, einer Nachricht umfasst, die einen Parameter umfasst, der den Schritt der Zuweisung auslöst.

5. Verfahren zur Allokation nach Anspruch 4, wobei der Parameter von einem Endgerät erhalten wird.

6. Verfahren zur Allokation nach Anspruch 1, welches außerdem vor dem Schritt der Zuweisung einen Schritt (F6a) der Auswahl eines Modulations- und Codierungsmerkmals für die Übertragung der Dateneinheit, die sich auf die zweite Anwendung bezieht, umfasst.

7. Verfahren zur Allokation nach Anspruch 1, wobei die empfangene Menge von Merkmalen außerdem mindestens eine Prioritätsinformation umfasst, die mindestens einem Merkmal zugeordnet ist.

8. Verfahren zur Allokation nach Anspruch 1, welches außerdem einen Schritt (G8) des Sendens, an die zentralisierte Entität, einer Benachrichtigung umfasst, die eine Angabe zu der Dateneinheit, die sich auf die erste Anwendung bezieht, umfasst.

9. Verfahren zur Allokation nach Anspruch 8, wobei die Benachrichtigung eine Prognose von Ressourcen für die Übertragung der Dateneinheit, die sich auf die erste Anwendung bezieht, umfasst.

10. Verfahren zur Allokation nach Anspruch 1, wobei die Allokationsnachricht auf einer Verbindung empfangen wird, welche die Kanäle von Benutzerdaten, Steuerung und Synchronisation der Ressourcen multiplexiert.

11. Verfahren zur Allokation nach Anspruch 1, wobei die Allokationsnachricht außerdem eine Information über eine Netzwerkschicht, Slice genannt, umfasst, die der Vielzahl von Ressourcen zugeordnet ist.

12. Vorrichtung (80) zur Allokation mindestens einer Übertragungsressource aus einer Vielzahl von Ressourcen, die für das Routing einer ersten Dateneinheit, die sich auf eine erste Anwendung bezieht, in einer Kommunikationsinfrastruktur bestimmt ist, umfassend:
- einen Empfänger (84), der geeignet ist, von einer zentralisierten Verwaltungsentität eine Allokationsnachricht einer Vielzahl von Ressourcen zu empfangen, die eine Menge von Merkmalen einer Übertragung von Daten, die sich auf eine zweite Anwendung beziehen, umfasst,
- ein Zuweisungsmodul (85), das geeignet ist, mindestens eine Ressource aus der Vielzahl von Ressourcen (M1) der Übertragung der Dateneinheit, die sich auf die erste Anwendung bezieht, zuzuweisen,
- ein Auswahlmodul (83), das geeignet ist auszuwählen:
- ein erstes Merkmal aus der Menge für die Übertragung einer Dateneinheit, die sich auf die zweite Anwendung bezieht,
- ein zweites Merkmal aus der Menge für die Übertragung einer folgenden Dateneinheit, die sich auf die zweite Anwendung bezieht, auf den Ressourcen der Vielzahl von Ressourcen (M1), die nicht der Übertragung der Dateneinheit, die sich auf die erste Anwendung bezieht, zugewiesen wurden.

13. System zur Allokation mindestens einer Übertragungsressource aus einer Vielzahl von Ressourcen, die für das Routing einer ersten Dateneinheit, die sich auf eine erste Anwendung bezieht, in einer Kommunikationsinfrastruktur bestimmt ist, umfassend:
- eine verteilte Verwaltungsentität (20), die eine Vorrichtung zur Allokation nach Anspruch 12 umfasst,
- eine zentralisierte Verwaltungsentität (10), welche umfasst:
- ein Zuweisungsmodul, das geeignet ist, eine Vielzahl von Ressourcen, die eine Menge von Übertragungsmerkmalen umfasst, der Übertragung der Daten zuzuweisen, die sich auf die zweite Anwendung beziehen,
- einen Sender, der geeignet ist, an die verteilte Verwaltungsentität eine Allokationsnachricht einer Vielzahl von Ressourcen zu senden, die eine Menge von Übertragungsmerkmalen der Daten, die sich auf die zweite Anwendung beziehen, umfasst.

14. Computerprogramm, **dadurch gekennzeichnet, dass** es Anweisungen für die Durchführung der Schritte des Verfahrens zur Allokation nach Anspruch 1, wenn dieses Verfahren von einem Prozessor ausgeführt wird, umfasst.

15. Aufzeichnungsmedium, das von einer Vorrichtung zur Allokation gemäß Anspruch 12 lesbar ist und auf dem das Programm nach Anspruch 14 aufgezeichnet ist.

## Claims

1. Method for allocating at least one transmission resource from among a plurality of resources, intended for the routing of an item of data relating to a first application in a communication infrastructure, the method being implemented in a distributed management entity (20) for managing the plurality of resources (M1), and comprising:
- a step (F4, G2) of receiving, from a centralized management entity (10), an allocation message for allocating a plurality of resources (M1) comprising a set of transmission features (M1/B1, M1/B2) for data relating to a second application,
- a step of selecting a first feature of the set for the transmission of an item of data relating to the second application,
- a step (F10, G'4) of assigning at least one resource (M2) of the plurality of resources (M1) to the transmission of the item of data relating to the first application,
- a step (F10, G"4) of selecting a second feature (M1/B2) of the set for the transmission of a following item of data relating to the second application on the resources of the plurality of resources (M1) not assigned to the transmission of the item of data relating to the first application.

2. Allocation method according to Claim 1, wherein a resource comprises a frequency band and a duration.

3. Allocation method according to Claim 1, wherein a resource comprises a wavelength.

4. Allocation method according to Claim 1, furthermore comprising a step (F0, F8) of the distributed management entity obtaining a message comprising a parameter that triggers the assignment step.

5. Allocation method according to Claim 4, wherein the parameter is obtained from a terminal.

6. Allocation method according to Claim 1, furthermore comprising, prior to the assignment step, a step (F6a) of selecting a modulation and coding feature for the transmission of the item of data relating to the second application.

7. Allocation method according to Claim 1, wherein the set of received features furthermore comprises at least one item of priority information associated with at least one feature.

8. Allocation method according to Claim 1, furthermore comprising a step (G8) of transmitting, to the centralized entity, a notification message comprising an indication about the item of data relating to the first application.

9. Allocation method according to Claim 8, wherein the notification message comprises a forecast of resources for the transmission of the item of data relating to the first application.

10. Allocation method according to Claim 1, wherein the allocation message is received over a connection that multiplexes the user data, control and resource synchronization channels.

11. Allocation method according to Claim 1, wherein the allocation message furthermore comprises an item of information about a network slice, called slice, associated with the plurality of resources.

12. Device (80) for allocating at least one transmission resource from among a plurality of resources, intended for the routing of a first item of data relating to a first application in a communication infrastructure, comprising:
- a receiver (84), able to receive, from a centralized management entity, an allocation message for allocating a plurality of resources comprising a set of transmission features for data relating to a second application,
- an assignment module (85), able to assign at least one resource of the plurality of resources (M1) to the transmission of the item of data relating to the first application,
- a selection module (83), able to select
- a first feature of the set for the transmission of an item of data relating to the second application,
- a second feature of the set for the transmission of a following item of data relating to the second application on the resources of the plurality of resources (M1) not assigned to the transmission of the item of data relating to the first application.

13. System for allocating at least one transmission resource from among a plurality of resources, intended for the routing of a first item of data relating to a first application in a communication infrastructure, comprising:
- a distributed management entity (20) comprising an allocation device according to Claim 12,
- a centralized management entity (10) comprising:
- an assignment module, able to assign a plurality of resources comprising a set of transmission features to the transmission of the data relating to the second application,
- a transmitter, able to transmit, to the distributed management entity, an allocation message for allocating a plurality of resources comprising a set of transmission features for the data relating to the second application.

14. Computer program, **characterized in that** it comprises instructions for implementing the steps of the allocation method according to Claim 1 when this method is executed by a processor.

15. Recording medium able to be read by an allocation device according to Claim 12 and on which the program according to Claim 14 is recorded.
